# FASCICULE DE BREVET EUROPEEN

(11) **EP 4 017 789 B1**
(45) Date de publication et mention de la délivrance du brevet: **07.05.2025**
(21) Numéro de dépôt: 20758278.4
(22) Date de dépôt: 10.08.2020
(51) Int. Cl.: B62D 29/00, B62D 25/20, B60R 19/18, B62D 27/02

(54) **RENFORT POUR CORPS CREUX**
VERSTÄRKUNG FÜR EINEN HOHLKÖRPER
REINFORCEMENT FOR HOLLOW BODY

(30) Priorité: 23.08.2019 FR 1909368
(43) Date de publication de la demande: 29.06.2022
(73) Titulaire: Stellantis Auto SAS, 78300 Poissy (FR)
(72) Inventeur: SEVRIN, Alexandre, 91400 ORSAY (FR)
(74) Mandataire: BCIP
(86) Numéro de dépôt international: PCT/FR2020/051453
(87) Numéro de publication internationale: WO 2021/038156

(56) Documents cités:
- EP-A1- 1 387 789
- EP-A1- 2 159 109
- EP-A1- 2 251 250
- WO-A1-2018/192946
- US-A1- 2002 190 541
- US-A1- 2009 167 054
- US-A1- 2016 017 909
- US-B1- 6 421 979

## Description

### Domaine technique

La présente invention revendique la priorité de la demande française 1909368 déposée le 23 Aout 2019.

L'invention a trait au renforcement de profilés de section en U, notamment de structure de carrosserie de véhicules automobiles, et plus particulièrement des brancards avant de véhicules automobiles.

### Technique antérieure

Certaines pièces de carrosserie qui assurent la rigidité des véhicules sur lesquels elles sont installées, ont une structure formant un ou plusieurs corps creux. Afin de renforcer en cas de choc ces pièces de carrosserie et/ou de limiter la masse augmentée des véhicules électriques les incorporant, il est connu de les renforcer en rajoutant dans les corps creux des inserts structuraux métalliques issus de profilés rectilignes. Tel est le cas, en particulier, pour les brancards avant des véhicules automobiles. Malheureusement, l'obturation (complète) du ou des corps creux des brancards avant par ces profilés, a pour inconvénient de créer un bouchon aux entrées d'eau et de sels provenant des projections des roues ou des écoulements d'eau provenant des parties hautes des véhicules automobiles, mais également de créer un bouchon aux fluides de revêtement par cataphorèse. Ceci a pour conséquence majeure de diminuer la garantie anti-corrosion des véhicules, et donc de fragiliser la structure des brancards avant.

Le document brevet publié EP1 387 789 B1 décrit un élément de renforcement pour des pièces de véhicules automobiles présentant des corps creux. Cet élément de renforcement, qui peut être élaboré en métal ou en matière plastique, présente une section transversale en forme de U ou de M qui est substantiellement conformée à la section transversale du corps creux auquel il est adapté pour être inséré. Des nervures sont également présentes sur la face externe de la paroi inférieure de cet élément de renforcement. Ces nervures ou extensions ont pour fonction de délimiter une ou des zones au niveau desquelles un matériel adhésif expansible peut être appliqué. Ce matériau expansible a pour fonction de relier l'élément de renforcement à la face intérieure du corps creux de la pièce de carrosserie et de participer ainsi à la consolidation de cette dernière. Cependant, bien que cet élément de renforcement puisse aussi présenter des orifices ou des canaux pour drainer l'eau pouvant s'accumuler au niveau du ou des corps creux de la pièce de carrosserie, il ne permet pas pour autant de garantir au cours du temps un drainage efficace et complet, et en cela de limiter ou empêcher la corrosion des corps creux et donc la fragilisation au cours du temps des pièces de carrosserie concernées.

### Exposé de l'invention

L'invention a pour objectif de pallier au moins un des inconvénients de l'état de la technique susmentionné. Plus particulièrement, l'invention a pour objectif d'empêcher efficacement la corrosion des profilés creux, de façon simple à mettre en œuvre.

A cet effet, l'invention a pour objet une poutre comprenant un profilé de section en U avec deux parois latérales et une paroi de fond ; un renfort logé dans la section en U du profilé et fixé audit profilé par un adhésif expansible entre les parois latérales de la section en U et ledit renfort. Le renfort forme une structure cloisonnée s'étendant suivant une direction principale et comprenant deux faces latérales opposées en vis-à-vis des parois latérales du profilé et une face de fond en vis-à-vis de la paroi de fond dudit profilé. La structure cloisonnée comprend sur la face de fond deux nervures s'étendant suivant la direction principale de manière à délimiter avec la paroi de fond du profilé un canal de ventilation. Une plaque fixée au profilé referme la section en U. L'adhésif expansible s'étend depuis les parois latérales vers la paroi de fond de la section en U et s'arrête aux nervures du renfort de manière à former le canal de ventilation. La structure cloisonnée comprend, sur la face de fond, entre les deux nervures et sur au moins un tronçon de ladite structure, une paroi de fond pourvue d'orifices de ventilation.

Selon un mode avantageux de l'invention, les orifices de ventilation présentent un diamètre moyen inférieur à 10mm et supérieur à 5mm.

Selon un mode avantageux de l'invention, les cloisons forment des chambres, la paroi de fond de la structure cloisonnée s'étendant suivant la direction principale le long de plusieurs chambres.

Selon un mode avantageux de l'invention, pour certaines des chambres, les orifices de ventilation sont au nombre de deux ou plus par chambre.

Selon un mode avantageux de l'invention, la paroi de fond de la structure cloisonnée s'étend transversalement à la direction principale au-delà des deux nervures jusqu'aux faces latérales de ladite structure.

Selon un mode avantageux de l'invention, la direction principale forme un coude, la paroi de fond de la structure cloisonnée s'étendant de manière continue le long dudit coude.

Avantageusement, un matériau adhésif expansible est appliqué sur les faces latérales du renfort.

Selon un mode avantageux de l'invention, la paroi de fond de la section en U du profilé comprend des ajours le long de la direction principale, en contact direct avec le canal de ventilation.

Selon un mode avantageux de l'invention, la poutre forme un coude et est une poutre structurelle longitudinale de véhicule automobile, désignée brancard.

L'invention a également pour objet un véhicule automobile comprenant un plancher ; un tablier inférieur avant fixé à un bord avant du plancher ; et deux poutres structurelles longitudinales s'étendant sous une partie avant du plancher vers un compartiment moteur du véhicule automobile ; remarquable en ce que chacune des deux poutres structurelles longitudinales est conforme à l'invention.

Les deux poutres structurelles longitudinales sont communément appelées brancards.

Les mesures de l'invention sont intéressantes en ce qu'elles permettent aux profilés creux de présenter une raideur notamment en flexion plus grande tout en assurant une garantie anti-corrosion plus étendue, et donc des meilleures performances mécaniques globales. En effet, la paroi de fond, située à distance de la fibre neutre du renfort (correspondant essentiellement à la direction principale de la structure cloisonnée dudit renfort), participe de manière optimale à la raideur du renfort, alors que les orifices de ventilation dans la paroi de fond en question, situés entre les deux nervures, permettent de créer une circulation verticale de l'air par convection qui facilite l'aération et l'assèchement permanent des corps creux des pièces de carrosserie concernées. Cette invention est d'autant plus intéressante qu'elle n'interfère pas par ailleurs sur l'efficacité de la cataphorèse de ces corps creux lors de l'étape de montage des véhicules automobiles.

D'autres caractéristiques et avantages de la présente invention seront mieux compris à l'aide de la description et des dessins, présentés à titre d'exemple.

### Brève description des dessins

[Fig 1] est une vue en perspective d'une portion de la partie avant de la structure d'un véhicule automobile selon l'invention;
[Fig 2] illustre une coupe transversale d'un brancard avant de la partie avant du véhicule de la figure 1, comprenant un renfort selon l'invention logé dans un profilé de section en U ;
[Fig 3] représente une vue de dessus et éclatée d'un brancard avant de la partie avant du véhicule de la figure 1, avec un renfort selon l'invention et un profilé de section en U non assemblés.

### Description détaillée

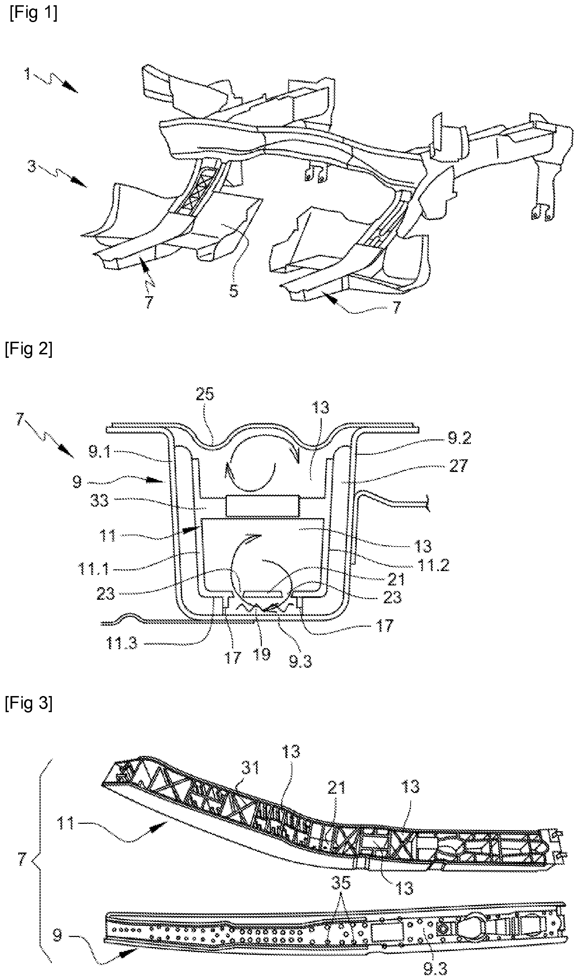

La figure 1 est une vue en perspective d'une portion de la partie avant de la structure d'un véhicule automobile selon l'invention. Cette partie avant 3 comprend notamment un plancher 5, un tablier inférieur fixé à un bord avant du plancher 5, et deux poutres structurelles longitudinales 7 qui s'étendent sous une partie avant du plancher 5 en direction du compartiment moteur (non représenté) du véhicule automobile 1. Ces poutres structurelles longitudinales 7, qui sont incurvées et forment un coude, sont communément désignées par le terme « brancard ».
La figure 2 représente une coupe transversale d'un brancard avant de la partie avant du véhicule de la figure 1. Ce brancard 7 comprend au moins deux éléments, à savoir un profilé 9 de section en U et un renfort 11 selon l'invention.

Le profilé 9 de section en U forme un corps creux délimité par deux parois latérales 9.1, 9.2 et une paroi de fond 9.3. De son côté le renfort 11 est une structure avec des cloisons qui délimitent des chambres ou alvéoles 13. Sur la coupe transversale de la figure 2, seules deux chambres 13 de la structure cloisonnée du renfort 11 sont en particulier visibles. Cette structure cloisonnée 11 est par ailleurs délimitée par deux faces latérales opposées 11.1, 11.2 et une face de fond 11.3. Les deux faces latérales 11.1, 11.2 sont destinées à être respectivement en regard des parois latérales 9.1, 9.2 du profilé 9 de section en U, et la face de fond 11.3 est quant à elle destinée à être en regard de la paroi de fond 9.3 du même profilé 9. Cette face de fond 11.3 comprend deux nervures 17 qui s'étendent suivant la direction principale de la structure cloisonnée 11 de façon à délimiter avec la paroi de fond 9.3 du profilé 9 de section en U un canal de ventilation 19. Entre ces deux nervures 17, et sur au moins une portion, la face de fond 11.3 comprend en outre une paroi de fond 21 avec des orifices de ventilation 23. Ces orifices de ventilation 23 présentent généralement un diamètre moyen inférieur à 10mm et supérieur à 5mm et peuvent être au nombre de deux ou plus pour chaque chambre située en vis-à-vis de la face de fond 11.3 de la structure cloisonnée 11. En l'occurrence sur la figure 2, seuls deux orifices de ventilation 23 sont représentés sur la paroi de fond 21 de la structure cloisonnée du renfort 11. Ces orifices de ventilation 23 servent en particulier à créer une circulation permanente d'air par convection entre l'intérieur des chambres 13 concernées et le canal de ventilation 19 permettant ainsi l'assèchement du ou des corps creux des brancards 7. Une plaque 25, fixée au profilé 9 de section en U et fermant la section en U, permet classiquement de délimiter la partie intérieure de la ou des chambres 13.

Il est également intéressant de noter que la paroi de fond 21 de la structure cloisonnée du renfort 11 selon l'invention peut également s'étendre transversalement à la direction principale au-delà des deux nervures 17 jusqu'aux faces latérales 11.1, 11.2 de la structure 11.

Avantageusement, et comme illustré sur la figure 2, un matériau adhésif expansible 27 peut également être appliqué entre les parois latérales 9.1, 9.2 du profilé 9 de section en U et la structure cloisonnée du renfort 11. Ce matériau adhésif expansible 27 est compatible aux températures de cuisson de revêtement anti-corrosion par cataphorèse autour du renfort 11. Sur la figure 2, le matériau adhésif expansible 27 s'étend notamment depuis les parois latérales 11.1, 11.2 vers la paroi de fond 9.3 du profilé 9 de section en U, et il s'arrête aux nervures 17 du renfort 11 de manière à former aussi le canal de ventilation 19.

La figure 3 représente une vue de dessus et éclatée d'un brancard avant de la partie avant du véhicule de la figure 1, avec un renfort selon l'invention et un profilé de section en U qui sont non assemblés. Sur cette figure 3, il est possible d'observer que la structure cloisonnée du renfort 11 s'étend, tout comme le profilé 9 de section en U, selon une direction principale en formant un coude, et que la paroi de fond 21 de cette structure 11 s'étend de manière continue le long dudit coude. Cette structure cloisonnée 11 est constituée de plusieurs chambres ou alvéoles 13 délimitées par des cloisons transversales 31. Ces chambres 13 sont alignées le long de la direction principale et peuvent également être délimitées par des cloisons horizontales ou obliques. Tel est le cas sur la figure 2, où une cloison horizontale 33 délimite deux chambres superposées 13. En l'occurrence, dans cet exemple, la cloison horizontale 33 comprend également, et sur au moins une portion, des orifices de ventilation (non individuellement représentés). La disposition de ces orifices de ventilation permet de créer une seconde circulation d'air verticale et continue entre les deux chambres 13 superposées de la figure 2, qui contribue aussi à l'assèchement au cours du temps des eaux de ruissellement provenant des parties hautes des véhicules automobiles 1 et/ou des fluides de cataphorèse utilisés lors du montage des pièces de carrosserie.

Comme illustré sur la figure 3, la paroi de fond 9.3 du profilé 9 de section en U du brancard 7 selon l'invention, comprend des ajours 35 le long de la direction principale, en contact direct avec le canal de ventilation 19, ce dernier étant en l'occurrence non visible sur la figure 3 mais illustré sur la figure 2.

De façon générale, le renfort pour corps creux de pièces de carrosserie, selon l'invention, présente l'avantage d'assécher en continue durant la vie du véhicule, les eaux pouvant stagner dans les corps creux dans lesquels il est inséré, et d'améliorer ainsi la garantie anti-corrosion des revêtements appliqués par cataphorèse lors du montage du véhicule, et en ce sens de permettre d'éviter la fragilisation des pièces de carrosserie à corps creux.

## Revendications

1. Poutre comprenant :
- un profilé (9) de section en U avec deux parois latérales (9.1, 9.2) et une paroi de fond (9.3);
- un renfort (11) logé dans la section en U du profilé (9) et fixé audit profilé (9) par un adhésif expansible (27) entre les parois latérales (9.1, 9.2) de la section en U (9) et ledit renfort (11) ; et
- une plaque (25) fixée au profilé (9) de manière à refermer la section en U ;
le renfort (11) formant une structure cloisonnée s'étendant suivant une direction principale et comprenant deux faces latérales (11.1, 11.2) opposées en vis-à-vis des parois latérales (9.1, 9.2) du profilé (9) et une face de fond (11.3) en vis-à-vis de la paroi de fond (9.3) dudit profilé (9),
**caractérisé en ce que**
la structure cloisonnée (11) comprend sur la face de fond (11.3) deux nervures (17) s'étendant suivant la direction principale et délimitant avec la paroi de fond (9.3) du profilé (9) un canal de ventilation (19), l'adhésif expansible (27) s'étendant depuis les parois latérales (9.1, 9.2) vers la paroi de fond (9.3) de la section en U (9) et s'arrête aux nervures (17) du renfort (11) de manière à former le canal de ventilation (19), la structure cloisonnée (11) comprenant en outre sur la face de fond (11.3), entre les deux nervures (17) et sur au moins un tronçon de ladite structure (11), une paroi de fond (21) pourvue d'orifices de ventilation (23).

2. Poutre selon la revendication 1, **caractérisé en ce que** les orifices de ventilation (23) présentent un diamètre moyen inférieur à 10mm et supérieur à 5mm.

3. Poutre selon l'une des revendications 1 et 2, **caractérisé en ce que** les cloisons (31, 33) forment des chambres (13), la paroi de fond (21) de la structure cloisonnée (11) s'étendant suivant la direction principale le long de plusieurs chambres (13).

4. Poutre selon la revendication 3, **caractérisé en ce que** pour certaines des chambres (13), les orifices de ventilation (23) sont au nombre de deux ou plus par chambre (13).

5. Poutre selon l'une des revendications 1 à 4, **caractérisé en ce que** la paroi de fond (21) de la structure cloisonnée (11) s'étend transversalement à la direction principale au-delà des deux nervures (17) jusqu'aux faces latérales (11.1, 11.2) de ladite structure (11).

6. Poutre selon l'une des revendications 1 à 5, **caractérisé en ce que** la direction principale forme un coude, la paroi de fond (21) de la structure cloisonnée (11) s'étendant de manière continue le long dudit coude.

7. Poutre selon l'une des revendications précédentes, **caractérisée en ce que** la paroi de fond (9.3) de la section en U du profilé (9) comprend des ajours (35) le long de la direction principale, en contact direct avec le canal de ventilation (19).

8. Poutre selon l'une des revendications précédentes, **caractérisée en ce qu'**elle forme un coude et est une poutre structurelle longitudinale (7) de véhicule automobile, désignée brancard (7).

9. Véhicule automobile (1) comprenant :
- un plancher (5);
- un tablier inférieur avant fixé à un bord avant du plancher (5); et
- deux poutres structurelles longitudinales (7) s'étendant sous une partie avant du plancher (5) vers un compartiment moteur du véhicule automobile (1);
**caractérisé en ce que**
chacune des deux poutres structurelles longitudinales (7) est selon l'une des revendications précédentes .

## Patentansprüche

1. Träger, umfassend:
- ein U-förmiges Querschnittsprofil (9) mit zwei Seitenwänden (9.1, 9.2) und einer Bodenwand (9.3);
- eine Verstärkung (11), die im U-förmigen Abschnitt des Profils (9) untergebracht ist und durch einen expandierenden Klebstoff (27) zwischen den Seitenwänden (9.1, 9.2) des U-förmigen Abschnitts (9) und der Verstärkung (11) an dem Profil (9) befestigt ist; Und
- eine Platte (25), die am Profil (9) befestigt ist, um den U-förmigen Abschnitt zu schließen;
wobei die Verstärkung (11) eine unterteilte Struktur bildet, die sich in einer Hauptrichtung erstreckt und zwei Seitenflächen (11.1, 11.2) gegenüber den Seitenwänden (9.1, 9.2) des Profils (9) und eine Bodenfläche (11.3) gegenüber der Bodenwand (9.3) des Profils (9) umfasst,
**dadurch gekennzeichnet, dass**
die geteilte Struktur (11) an der Unterseite (11.3) zwei Rippen (17) aufweist, die sich in Hauptrichtung erstrecken und mit der Bodenwand (9.3) des Profils (9) einen Belüftungskanal (19) begrenzen, wobei sich der expandierbare Klebstoff (27) von den Seitenwänden (9.1, 9.2) in Richtung Bodenwand (9.3) des U-förmigen Abschnitts (9) erstreckt und an den Rippen (17) der Verstärkung (11) endet, um den Belüftungskanal (19) zu bilden, und die geteilte Struktur (11) ferner an der Unterseite (11.3) zwischen den beiden Rippen (17) und an mindestens einem Abschnitt der Struktur (11) eine Bodenwand (21) aufweist, die mit Belüftungsöffnungen (23) versehen ist.

2. Träger nach Anspruch 1, **dadurch gekennzeichnet, dass** die Belüftungsöffnungen (23) einen durchschnittlichen Durchmesser kleiner 10 mm und größer 5 mm aufweisen.

3. Träger nach einem der Ansprüche 1 und 2, **dadurch gekennzeichnet, dass** die Trennwände (31, 33) Kammern (13) bilden, wobei sich die Bodenwand (21) der Trennstruktur (11) in Hauptrichtung entlang mehrerer Kammern (13) erstreckt.

4. Träger nach Anspruch 3, **dadurch gekennzeichnet, dass** bei einigen Kammern (13) die Anzahl der Belüftungsöffnungen (23) zwei oder mehr pro Kammer (13) beträgt.

5. Träger nach einem der Ansprüche 1 bis 4, **dadurch gekennzeichnet, dass** sich die Bodenwand (21) der geteilten Struktur (11) quer zur Hauptrichtung über die beiden Rippen (17) hinaus bis zu den Seitenflächen (11.1, 11.2) dieser Struktur (11) erstreckt.

6. Träger nach einem der Ansprüche 1 bis 5, **dadurch gekennzeichnet, dass** die Hauptrichtung einen Bogen bildet, wobei die Bodenwand (21) der Trennstruktur (11) sich durchgehend entlang dieses Bogens erstreckt.

7. Träger nach einem der vorhergehenden Ansprüche, **dadurch gekennzeichnet, dass** die Bodenwand (9.3) des U-förmigen Abschnitts des Profils (9) entlang der Hauptrichtung Öffnungen (35) aufweist, die in direktem Kontakt mit dem Belüftungskanal (19) stehen.

8. Träger nach einem der vorhergehenden Ansprüche, **dadurch gekennzeichnet, dass** er einen Krümmer bildet und ein Längsträger (7) eines Kraftfahrzeugs ist, der als Träger (7) bezeichnet wird.

9. Kraftfahrzeug (1) umfassend:
- einen Boden (5);
- eine untere Frontschürze, die an einer Vorderkante des Bodens (5) befestigt ist; Und
- zwei Längsstrukturträger (7), die sich unter einem vorderen Teil des Bodens (5) in Richtung eines Motorraums des Kraftfahrzeugs (1) erstrecken;
**dadurch gekennzeichnet, dass**
jeder der beiden Längsträger (7) ist nach einem der vorhergehenden Ansprüche ausgebildet.

## Claims

1. Beam comprising:
- a profile (9) of U-shaped section with two side walls (9.1, 9.2) and a bottom wall (9.3);
- a reinforcement (11) housed in the U-shaped section of the profile (9) and fixed to said profile (9) by an expandable adhesive (27) between the side walls (9.1, 9.2) of the U-shaped section (9) and said reinforcement (11); and
- a plate (25) fixed to the profile (9) so as to close the U-shaped section;
the reinforcement (11) forming a partitioned structure extending in a main direction and comprising two opposite side faces (11.1, 11.2) facing the side walls (9.1, 9.2) of the profile (9) and a bottom face (11.3) facing the bottom wall (9.3) of said profile (9),
**characterized in that**
the partitioned structure (11) comprises on the bottom face (11.3) two ribs (17) extending in the main direction and delimiting with the bottom wall (9.3) of the profile (9) a ventilation channel (19), the expandable adhesive (27) extending from the side walls (9.1, 9.2) towards the bottom wall (9.3) of the U-shaped section (9) and stops at the ribs (17) of the reinforcement (11) of so as to form the ventilation channel (19), the partitioned structure (11) further comprising on the bottom face (11.3), between the two ribs (17) and on at least one section of said structure (11), a bottom wall (21) provided with ventilation orifices (23).

2. Beam according to claim 1, **characterized in that** the ventilation orifices (23) have an average diameter of less than 10 mm and greater than 5 mm.

3. Beam according to one of claims 1 and 2, **characterized in that** the partitions (31, 33) form chambers (13), the bottom wall (21) of the partitioned structure (11) extending in the main direction along several chambers (13).

4. Beam according to claim 3, **characterized in that** for some of the chambers (13), the ventilation orifices (23) are two or more in number per chamber (13).

5. Beam according to one of claims 1 to 4, **characterized in that** the bottom wall (21) of the partitioned structure (11) extends transversely to the main direction beyond the two ribs (17) to the lateral faces (11.1, 11.2) of said structure (11).

6. Beam according to one of claims 1 to 5, **characterized in that** the main direction forms an elbow, the bottom wall (21) of the partitioned structure (11) extending continuously along said elbow.

7. Beam according to one of the preceding claims, **characterized in that** the bottom wall (9.3) of the U-shaped section of the profile (9) comprises openings (35) along the main direction, in direct contact with the ventilation channel (19).

8. Beam according to one of the preceding claims, **characterized in that** it forms an elbow and is a longitudinal structural beam (7) of a motor vehicle, designated a stretcher (7).

9. Motor vehicle (1) comprising:
- a floor (5);
- a front lower apron fixed to a front edge of the floor (5); and
- two longitudinal structural beams (7) extending under a front portion of the floor (5) towards an engine compartment of the motor vehicle (1);
**characterized in that**
each of the two longitudinal structural beams (7) is according to one of the preceding claims.
